# EUROPEAN PATENT SPECIFICATION

(11) **EP 2 601 093 B1**
(45) Date of publication and mention of the grant of the patent: **17.12.2014**
(21) Application number: 11725966.3
(22) Date of filing: 06.05.2011
(51) Int. Cl.: B62K 3/00, B62H 1/02, A61G 5/04

(54) **CONVERSION ASSEMBLY TO BE APPLIED TO A "SEGWAY" ® OR THE LIKE TRANSPORTER**
"UMWANDLUNGSANORDNUNG FÜR EINEN »SEGWAY"" ® ODER ÄHNLICHEN TRANSPORTER "
ENSEMBLE DE CONVERSION A APPLIQUER A UN TRANSPORTEUR DE TYPE SEGWAY® OU SIMILAIRE

(30) Priority: 05.08.2010 IT TO20100682
(43) Date of publication of application: 12.06.2013
(73) Proprietor: Carrozzeria 71 S.r.L., 14036 Moncalvo (Asti) (IT)
(72) Inventor: NOSENZO, Fausto, I-14036 Moncalvo (Asti) (IT); NOSENZO, Alessandra, I-14036 Moncalvo (Asti) (IT)
(74) Representative: Buzzi, Franco
(86) International application number: PCT/IB2011/052011
(87) International publication number: WO 2012/017335

(56) References cited:
- WO-A1-2007/100148
- WO-A1-2010/084762
- DE-A1-102007 061 708
- DE-U1-202007 004 010

## Description

### Field of the invention

The present invention relates to transporters currently available on the market under the name "SEGWAY^{®}", produced and marketed by Segway Inc., USA, and to similar vehicles, i.e., ones with equivalent working principle.

### State of the art

Transporters of this sort notoriously comprise a platform situated between a pair of electrically motor-driven coaxial wheels and bearing load sensor means designed to detect the presence of a rider set standing up on the platform. Said sensors are prearranged for enabling activation of a control unit designed to govern the motor-driven wheels with the aid of gyroscopic and accelerometric sensors connected to an electronic feedback-control microprocessor. When the rider shifts his body forwards and backwards, the motor-driven wheels are actuated so as to cause the transporter to go forwards, stop, or go backwards, whilst in order to steer the vehicle an oscillating stem with a handlebar is provided.

Currently, the use of the above "SEGWAY^{®}" transporters, or vehicles with equivalent working principle, is limited to users set, as has been said, standing up on the platform and is thus excluded for people who prefer, out of choice or for needs of a personal nature or else of a physical nature or also for reasons of safety, a different riding position.

Known from the document No. DE-102007061708 is a similar vehicle equipped with a seat and hence pre-arranged for riding in a sitting position which includes the features of the preamble of claim 1. Said vehicle presents, however, only a modest degree of safety and is exposed to risks of turning over.

### Summary of the invention

The object of the invention is to overcome the aforesaid drawback and to extend the field of use of the aforesaid "SEGWAY^{®}" transporters, as well as of vehicles with equivalent working principle, i.e., to enable use thereof in a riding position where the user is sitting down instead of standing up with the maximum degree of safety, without intervening on or interfering with the electronic control system of the transporter and hence maintaining all the characteristics of safety thereof already envisaged by the manufacturer.

A further object of the invention is to achieve said result substantially without structural modifications of the "SEGWAY^{®}" transporter or the like but simply with the use of components, preferably mechanical ones, that are relatively easy to apply and equally convenient to remove in the event where the transporter must then be restored to its original configuration.

According to the invention, the above purpose is basically achieved thanks to a conversion assembly that can be applied to "SEGWAY^{®}" transporters or vehicles with equivalent working principle, as set forth in claim 1.

The conversion assembly according to the invention can be advantageously constituted by components that are basically or even exclusively mechanical and in any case in no way interfere with the existing electronic control and command system of the transporter, and can hence be applied thereto easily and removed therefrom equally easily to restore the original configuration thereof.

Preferably, the rests of the stabilization unit can also be blocked temporarily in an intermediate safety position during their displacement from the lowered position where they rest on the ground to the inoperative raised position so as to make up for any possible errors on the part of the rider upon starting of the transporter.

### Brief description of the drawings

The invention will now be described in detail with reference to the annexed drawings, which are provided purely by way of non-limiting example, and in which:
- Figure 1 is a schematic perspective view of a "SEGWAY^{®}" transporter (or of a similar vehicle with equivalent working principle) to which a conversion assembly according to the invention is applied;
- Figure 2 is a simplified and partially sectioned side elevation of the conversion assembly applied to the "SEGWAY^{®}" transporter (or to a similar vehicle with equivalent working principle), represented in a first condition;
- Figures 3 to 5 are three views similar to that of Figure 2, which illustrate further operating conditions of the conversion assembly; and
- Figures 6 to 9 are schematic representations in side elevation exemplifying the configuration and the modalities of operation of a variant of the stabilization system of the conversion assembly according to the invention.

### Detailed description of the invention

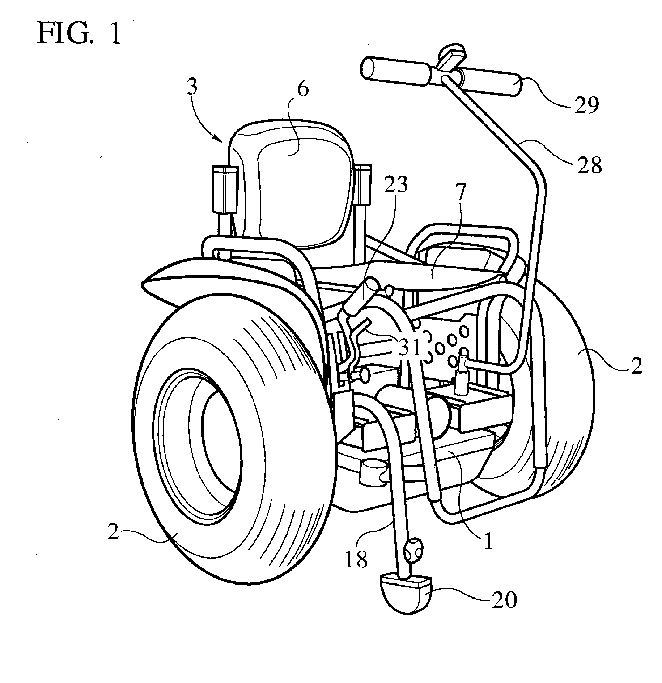

Figure 1 is a schematic illustration of a "SEGWAY^{®}" transporter or vehicle with equivalent working principle modified with the application of the conversion assembly according to the invention.

Notoriously, the "SEGWAY^{®}" transporter, as originally produced and marketed, comprises in extreme synthesis a platform 1, which is normally provided for accommodating a rider set standing up and at the sides

The invention will now be described in detail with reference to the annexed drawings, which are provided purely by way of non-limiting example, and in which:
- Figure 1 is a schematic perspective view of a "SEGWAY^{®}" transporter (or of a similar vehicle with equivalent working principle) to which a conversion assembly according to the invention is applied;

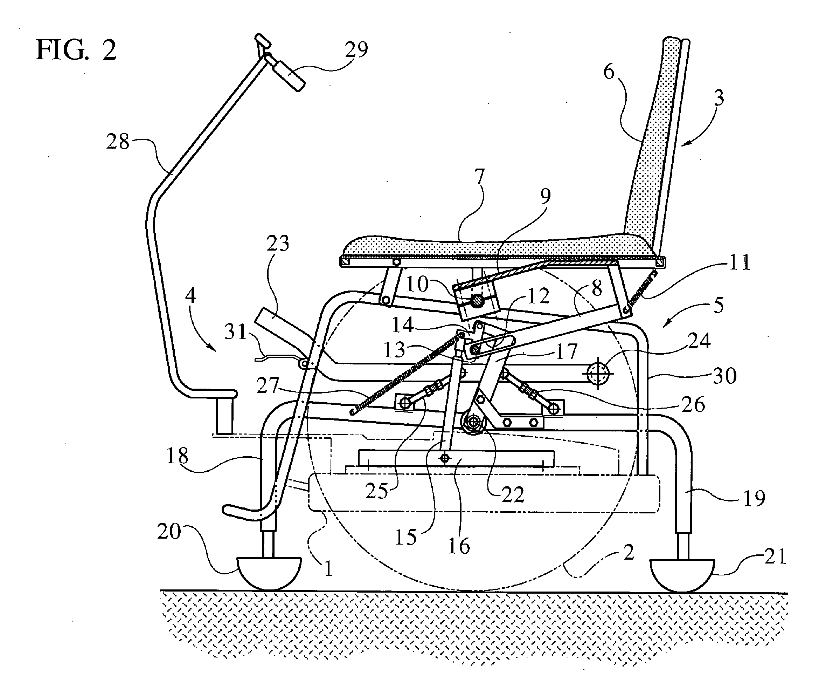

- Figure 2 is a simplified and partially sectioned side elevation of the conversion assembly applied to the "SEGWAY^{®}" transporter (or to a similar vehicle with equivalent working principle), represented in a first condition;

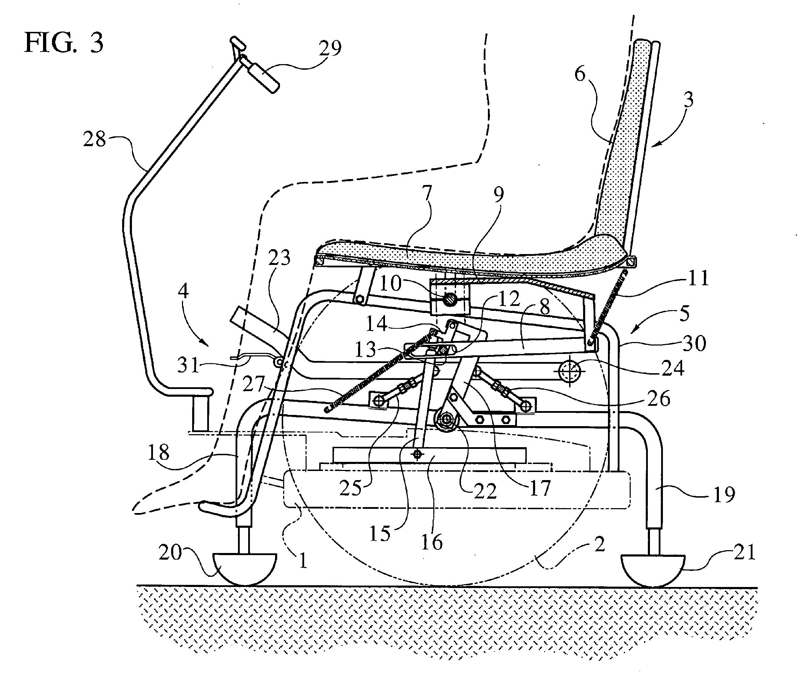

- Figures 3 to 5 are three views similar to that of Figure 2, which illustrate further operating conditions of the conversion assembly; and

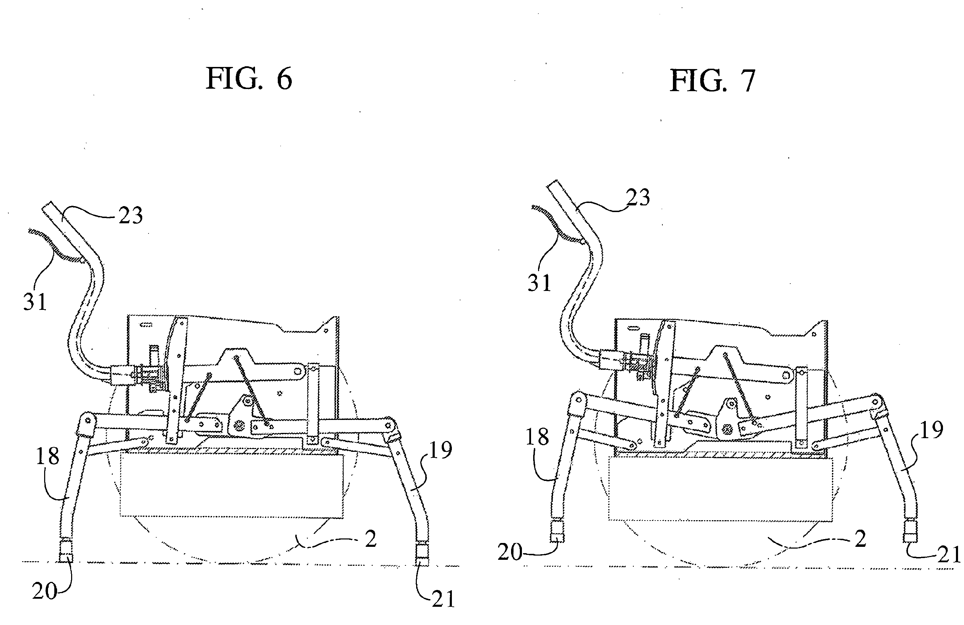

- Figures 6 to 9 are schematic representations in side elevation exemplifying the configuration and the modalities of operation of a variant of the stabilization system of the conversion assembly according to the invention.

### Detailed description of the invention

Figure 1 is a schematic illustration of a "SEGWAY^{®}" transporter or vehicle with equivalent working principle modified with the application of the conversion assembly according to the invention.

Notoriously, the "SEGWAY^{®}" transporter, as originally produced and marketed, comprises in extreme synthesis a platform 1, which is normally provided for accommodating a rider set standing up and at the sides of which two wheels 2 are set actuated via respective electric motors, which are in turn controlled via a microprocessor system governed by a series of sensors provided both for detecting the presence of the rider on the platform 1 (load or pressure sensors) and for detecting the commands imparted by the rider to manoeuvre the transporter: these are gyroscopic and accelerometric sensors designed to detect the inclination forwards or backwards of the body of the rider for the manoeuvres for moving the "SEGWAY^{®}" transporter forwards, stopping it, and moving it backwards. Steering, which is obtained as a result of a differentiated actuation of the two wheels 2, is instead imparted by the rider via an oscillating stem 28 projecting upwards from the platform 1 and equipped with a handlebar for manoeuvring.

The conversion assembly according to the invention has, as has been said, the function of enabling riding of the "SEGWAY^{®}" transporter (or of a similar vehicle with equivalent working principle) in a position where the rider is sitting down instead of standing up, by users who prefer this use for needs of a physical nature or for personal safety, or more simply for greater convenience.
As is illustrated in greater detail in Figure 2 (and also in Figures 3 to 5), where the parts of the original "SEGWAY^{®}" transporter are represented with dashed and dotted lines, the conversion assembly - represented with a solid line - basically comprises a seat 3 that can be positioned via a supporting structure 30 on the platform 1, a stabilization unit 4 that can be actuated manually, and an activation and deactivation mechanism operatively connected, on one side, to the seat 3 and, on the other, to the stabilization unit 4.

The seat 3 comprises a backrest 6 possibly with modulatable stiffness, and a seat part 7 that can be translated vertically or is partially flexible or elastically deformable, set underneath which is the activation and deactivation device 5 and, alongside this, the stabilization unit 4.

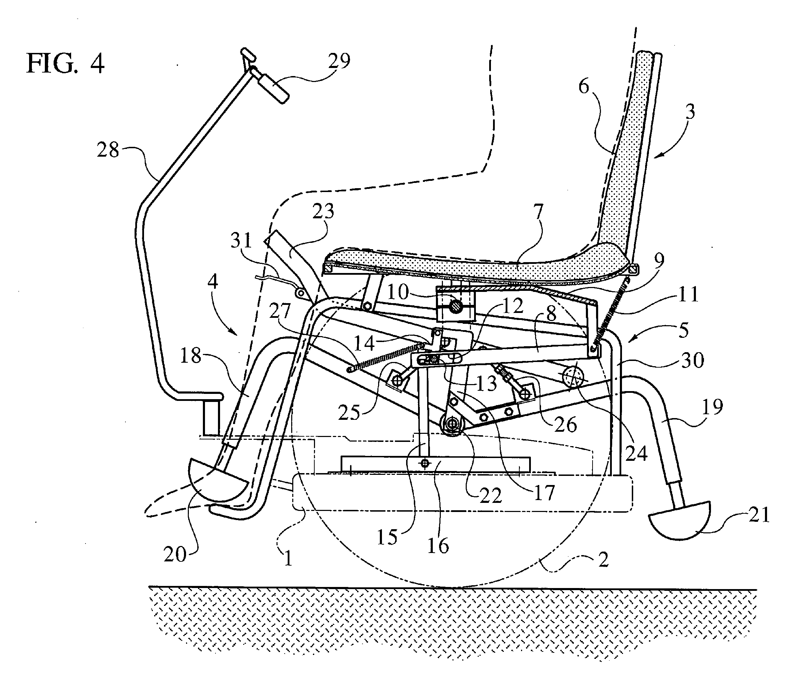

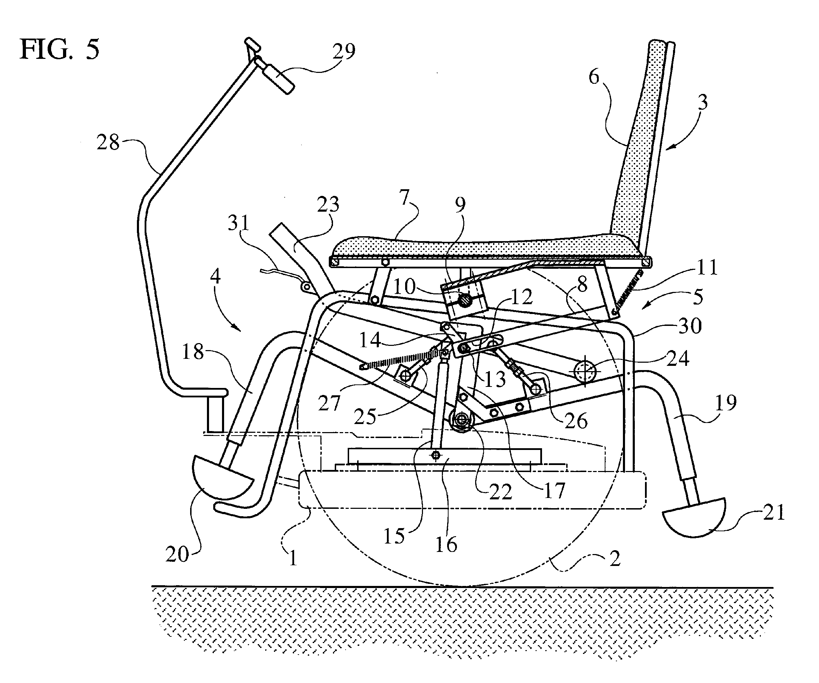

The activation and deactivation system 5 acts, in combination with the stabilization unit 4, on the presence sensors associated to the platform 1: for this purpose, an oscillating arm 8 is provided, rigidly connected to a support 9 that can turn about a transverse shaft 10 from the raised position represented in Figures 2 and 5 to the lowered position represented in Figures 3 and 4 as a result of displacement or of bending or elastic deformation of the seat part 7 of the seat 3 when the rider is sitting thereon, against the action of a return spring 11.

The arm 8 is formed at its free end with a slot 12, slidably and rotatably coupled in which is a shaft 13, fixed at the ends of which are two levers 14, just one of which is visible in the drawings. Each lever 14 is articulated, on one side, to the top end of a respective strut 15, the bottom end of which is prearranged to act, via a thrust plate 16, on the presence sensors associated in a way in itself known to the platform 1.

The strut 15 has an elastically shortenable and lengthenable telescopic conformation.

The lever 14 is moreover articulated to the top end of a bracket-shaped lever 17 connected at the bottom to the stabilization unit 4.

The stabilization unit 4 comprises a pair of L-shaped arms 18, 19 projecting, respectively, in front of and behind the platform 1 and bearing, at the bottom, respective resting feet 20, 21. The arms 18, 19 are articulated to one another about a transverse pin 22, also articulated to which is the bottom end of the bracket-shaped lever 17.

Designated by 23 is a manual-actuation lever or bar, which is set alongside and underneath the seat 3 and can turn about a transverse pin 24 between the lowered position, represented in Figures 2 and 3, and the raised position, represented in Figures 4 and 5. The lever 23 is connected, via two inclined connecting rods 25, 26, respectively to the arms 18 and 19 bearing the rests 20 and 21. A tension spring 27 connects the front arm 18 to the top of the telescopic strut 15.

Associated to the bar 23 is a lever 31, which can be actuated manually for governing, via a flexible cable, a release device (not illustrated) for return of the bar 23 from the raised position to the lowered position.

Designated by 28 is the stem, provided, at the top, with a handlebar 29, via which the rider can operate in a known way, via differentiated actuation of the wheels 2, steering of the transporter. Said stem 28, applied instead of the one with which the "SEGWAY^{®}" transporter is normally originally equipped, consists in a substitutive upright shaped so as to enable a more convenient actuation thereof by the rider sitting on the seat 3. The stem 28 can be slid out of the corresponding support for enabling convenient access to the seat 3 by the user.

Operation of the conversion assembly thus presented is described in what follows.

Figure 2 illustrates the condition of rest of the transporter, in the absence of the rider. The stabilization unit 4 is positioned with the control lever 23 lowered and the two arms 18, 19 held, via the connecting rods 25, 26, in the position in which the corresponding feet 20, 21 rest on the ground so as to keep the "SEGWAY^{®}" transporter (or the similar vehicle with equivalent working principle) stably in a condition such as to enable the rider to sit down. The activation and deactivation device 5 is set in an inoperative condition, with the arm 8 and the corresponding support 9 kept raised via the spring 11 and the pin 13 of the lever 14 positioned at the front end of the slot 12. The strut 15 is substantially unloaded, i.e., without any pressure or thrust applied against the plate 16 fixed to the platform 1. In this condition, the presence sensors associated to the platform 1 are deactivated and operation of the "SEGWAY^{®}" transporter (or similar vehicle with equivalent working principle) is inhibited.

When the rider is positioned on the seat 3, in the way represented in Figure 3, the displacement or bending or elastic deformation of the seat part 7 due to the weight of the rider causes rotation of the support 9 about the shaft 10 and consequent rotation downwards of the arm 8, against the action of the spring 11. As a result of said rotation, the pin 13 of the lever 14 recedes along the slot 12, without, however, turning, and hence without said lever 14 applying a load of thrust on the strut 15.

Said thrust is applied only following upon deactivation of the stabilization unit 4 performed by the rider by raising the control bar 23. This manoeuvre causes both rotation of the arms 18, 19 corresponding to lifting off the ground of the corresponding resting feet 20, 21 and rotation forwards of the bracket-shaped lever 17, which in turn causes a rotation downwards of the lever 14 and consequent application of a load of thrust on the strut 15. At the end of this step (represented in Figure 4), the pressure applied on the plate 16 by the strut 15 produces activation of the presence sensors associated to the platform 1 and, as direct consequence, activation of the electronic control system of the "SEGWAY^{®}" transporter (or of the similar vehicle with equivalent working principle). The transporter can thus be driven by the rider by shifting his bust forwards and backwards to enable the transporter to go forwards, stop, and go backwards, and by manoeuvring the stem 28 via the handlebar 29 to perform steering thereof in one direction or in the opposite direction.

To restore the stabilization unit 4, following upon arrest of the transporter, it is sufficient to operate the lever 31 manually so as to release the bar 23 and bring the resting feet 20, 21 back into the starting lowered position.

In the case where, in any accidental eventuality, the rider were to fall off the seat 3, there would arise the situation represented in Figure 5, with practically immediate interruption of operation of the "SEGWAY^{®}" transporter (or of the similar vehicle with equivalent working principle). Return of the seat part 7 of the seat 3 into its undeformed condition produces, in this case, also thanks to the elastic return of the spring 11, return of the support 9 and of the lever 8 into the starting raised position and consequent recall of the lever 14 into the position of non-application of the load of thrust on the strut 15, performed by the lever 17. This effect is obtained following upon a sudden jerky displacement of the entire linkage, also made possible by the elastically extensible conformation of the strut 15. As a consequence, the absence of pressure transmitted by the plate 16 to the platform 1 produces, following upon deactivation of the presence sensors associated thereto, immediate arrest of the "SEGWAY^{®}" transporter (or of the similar vehicle with equivalent working principle), without any need to intervene on the lever 23, thus guaranteeing maximum safety.

It is evident that the same effect can be obtained voluntarily by the rider sitting on the seat 3 by manoeuvring the lever 23 as has been said so as to bring it back into the lowered position of Figure 3 in order to reposition the rests 20 and 21 on the ground and cause, as a result of rotation of the bracket-shaped lever 17 into the starting position, the load of thrust applied by the lever 14 on the strut 15 to cease.

It will emerge clearly from the foregoing description that the conversion assembly according to the invention considerably extends the current field of use of the "SEGWAY^{®}" transporter and of a similar vehicle with equivalent working principle, enabling safe use thereof also when it is driven with the user sitting down instead of standing up, via relatively simple mechanisms that in no way interfere with the original electronic control system of the transporter other than by the direct co-operation with the presence sensors associated to the platform 1.

It should on the other hand be noted that the mechanisms, and in particular the system for controlling the resting feet 20, 21 of the stabilization unit 4, could also envisage the use of one or more servo actuators, for example electrical ones.

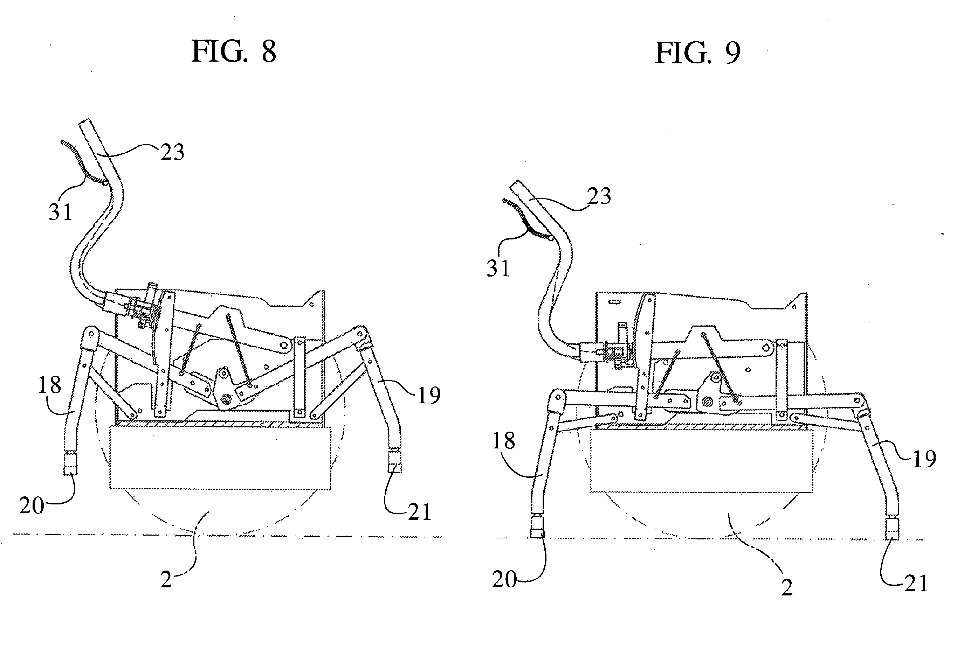

It should moreover be noted that the conformation of the mechanisms described with reference to the drawings is provided purely by way of example and that the same functional effects can be obtained with mechanisms and linkages having different and equivalent configurations, such as, for example, the one represented schematically in Figures 6 to 8, which also envisages positioning and blocking the rests 20, 21 of the stabilization unit 4 temporarily in an intermediate position (represented in Figure 7) in the course of their displacement from the lowered position where they rest on the ground (Figure 6) to the inoperative raised position (Figure 8). Said intermediate position affords further safety for the user who is sitting on the transporter in the case where the user has erroneously actuated the stabilization unit 4 without, however, activating previously (via a key or remote control) the electronic control unit of the "SEGWAY^{®}" transporter or similar vehicle with equivalent working principle. Raising of the bar 23 performed by the user sitting on the seat starting from the position of Figure 6 first stops in the intermediate position of Figure 7, and then proceeds towards the raised position of Figure 8 only following upon a further voluntary actuation. In said intermediate position, the rests 20, 21 in any case prevent in a safe way the transporter from possibly turning over, and there may also be provided a temporary mechanical blockage of the steering stem 28 (not illustrated).

To bring the rests 20 and 21 back into the lowered starting position the user will then simply have to operate the release lever 31 in the way illustrated in Figure 9.

Of course, the details of construction and the embodiments may vary widely with respect to what has been described and illustrated herein, without thereby departing from the scope of the present invention as defined in the ensuing claims.

## Claims

1. A conversion assembly that can be applied to a transporter or similar vehicle comprising a platform (1), which is situated between a pair of electrically motor-driven coaxial wheels (2) and bears load sensor means prearranged for detecting the presence of the rider on the platform and enabling activation of an electronic control unit designed to govern the motor-driven wheels (2) also in response to variations in a position of the rider with respect to the platform (1), said conversion assembly being designed for riding said transporter in a seated position and being **characterized in that** it comprises:
- a seat (3), which can be positioned on said platform (1) for co-operating functionally with said sensor means in such a way as to disable or enable activation thereof in the absence or in the presence, respectively, of a rider on said seat (3);
- a stabilization unit (4), including a pair of rests (20, 21) that can be positioned respectively in front of and behind said platform (1) and can be displaced selectively by the rider on said seat (3) between a lowered position where they rest on the ground and an inoperative raised position; and
- means (5) for activation and deactivation of said sensor means for controlling activation thereof following upon displacement of said rests (20, 21) of the stabilization unit (4) from the lowered position to the raised position performed by the rider sitting on the seat, and for automatically interrupting activation thereof in said raised position of said rests (20, 21) in the case of the rider falling off the seat (3),
said activation and deactivation means (5) including strut means (15) prearranged for applying a load of thrust on the platform (1), and lever mechanisms (8, 14, 17) for actuation of said strut means (15) operatively connected to the seat (3) and to said stabilization unit (4).

2. The conversion assembly according to Claim 1, **characterized in that** said lever mechanisms comprise an oscillating arm (8) actuated as a result of a displacement or of an elastic deformation of the seat part (7) of said seat (3) caused by the weight of the rider sitting thereon.

3. The conversion assembly according to any one of the preceding claims, **characterized in that** the rests (20, 21) of said stabilization unit (4) can moreover be blocked temporarily in an intermediate safety position in the course of their displacement from the lowered position where they rest on the ground to the inoperative raised position.

## Patentansprüche

1. Umwandlungsanordnung für einen Transporter oder ein ähnliches Fahrzeug, umfassend eine Plattform (1), die sich zwischen einem Paar von durch einen Elektromotor angetriebenen koaxialen Rädern (2) befindet und Lastsensormittel trägt, die so ausgelegt sind, dass sie die Anwesenheit des Fahrers auf der Plattform erkennen und die Aktivierung einer elektronischen Steuereinheit ermöglichen, die so ausgestaltet ist, dass sie die motorgetriebenen Räder (2) u. a. in Abhängigkeit von Veränderungen einer Position des Fahrers bezogen auf die Plattform (1) steuert, wobei die Umwandlungsanordnung zum Fahren des Transporters in einer sitzenden Position ausgestaltet ist und **dadurch gekennzeichnet ist, dass** sie umfasst:
- einen Sitz (3), der so auf der Plattform (1) positioniert werden kann, dass er funktional derart mit den Sensormitteln zusammenwirkt, dass er bei Abwesenheit oder Anwesenheit eines Fahrers auf dem Sitz (3) deren Aktivierung verhindert bzw. ermöglicht;
- eine Stabilisierungseinheit (4), die ein Paar Stützen (20, 21) umfasst, die vor bzw. hinter der Plattform (1) positioniert werden können und durch den Fahrer auf dem Sitz (3) wahlweise zwischen einer abgesenkten Position, in der sie auf dem Boden aufliegen, und einer unwirksamen angehobenen Position verstellt werden können; und
- Mittel (5) zur Aktivierung und Deaktivierung der Sensormittel zur Steuerung der Aktivierung derselben nach der durch den auf dem Sitz sitzenden Fahrer vorgenommenen Verstellung der Stützen (20, 21) der Stabilisierungseinheit (4) aus der abgesenkten Position in die angehobene Position und zur automatischen Unterbrechung der Aktivierung derselben in der angehobenen Position der Stützen (20, 21) im Fall, dass der Fahrer vom Sitz (3) fällt,
wobei die Aktivierungs- und Deaktivierungsmittel (5) umfassen: Verstrebungsmittel (15), die so ausgelegt sind, dass sie eine Schublast auf die Plattform (1) ausüben, und Hebelmechanismen (8, 14, 17) zur Betätigung der Verstrebungsmittel (15), die in Wirkverbindung mit dem Sitz (3) und der Stabilisierungseinheit (4) stehen.

2. Umwandlungsanordnung nach Anspruch 1, **dadurch gekennzeichnet, dass** die Hebelmechanismen einen schwingenden Arm (8) umfassen, der infolge einer Verstellung oder elastischen Verformung des Sitzteils (7) des Sitzes (3), bewirkt durch das Gewicht des darauf sitzenden Fahrers, betätigt wird.

3. Umwandlungsanordnung nach einem der vorangehenden Ansprüche, **dadurch gekennzeichnet, dass** die Stützen (20, 21) der Stabilisierungseinheit (4) im Zuge ihrer Verstellung aus der abgesenkten Position, in der sie auf dem Boden aufliegen, in die unwirksame angehobene Position außerdem vorübergehend in einer dazwischen liegenden Sicherheitsposition arretiert werden können.

## Revendications

1. Ensemble de conversion qui peut être appliqué à un transporteur ou un véhicule similaire comprenant une plateforme (1), qui est située entre une paire de roues coaxiales (2) électriquement entraînées par moteur et supporte des moyens de capteur de charge pré-agencés pour détecter la présence du conducteur sur la plateforme et permettre l'activation d'une unité de commande électronique conçue pour gérer les roues entraînées par moteur (2) également en réponse aux variations d'une position du conducteur par rapport à la plateforme (1), ledit ensemble de conversion étant conçu pour conduire ledit transporteur dans une position assise et étant **caractérisé en ce qu'**il comprend :
un siège (3) qui peut être positionné sur ladite plateforme (1) pour coopérer de manière fonctionnelle avec lesdits moyens de capteur afin de désactiver ou permettre leur activation respectivement en l'absence ou en présence d'un conducteur sur ledit siège (3) ;
une unité de stabilisation (4) comprenant une paire de supports (20, 21) qui peuvent être respectivement positionnés en face et derrière ladite plateforme (1) et peuvent être sélectivement déplacés par le conducteur sur ledit siège (3) entre une position abaissée dans laquelle ils reposent sur le sol et une position levée non opérationnelle ; et
des moyens (5) pour l'activation et la désactivation desdits moyens de capteur afin de commander leur activation suite au déplacement desdits supports (20, 21) de l'unité de stabilisation (4) de la position abaissée à la position levée, réalisée par le conducteur assis sur le siège, et pour interrompre automatiquement leur activation dans ladite position levée desdits supports (20, 21), dans le cas dans lequel le conducteur tombe du siège (3),
lesdits moyens d'activation et de désactivation (5) comprenant des moyens d'entretoise (15) pré-agencés pour appliquer une charge de poussée sur la plateforme (1) et des mécanismes de levier (8, 14, 17) pour l'activation desdits moyens d'entretoise (15) opérationnellement raccordés au siège (3) et à ladite unité de stabilisation (4).

2. Ensemble de conversion selon la revendication 1, **caractérisé en ce que** lesdits mécanismes de levier comprennent un bras oscillant (8) actionné à cause d'un déplacement ou d'une déformation élastique de la partie de siège (7) dudit siège (3) provoqué(e) par le poids du conducteur assis sur ce dernier.

3. Ensemble de conversion selon l'une quelconque des revendications précédentes, **caractérisé en ce que** les supports (20, 21) de ladite unité de stabilisation (4) peuvent, de plus, être temporairement bloqués dans une position de sécurité intermédiaire au cours de leur déplacement de la position abaissée dans laquelle ils reposent sur le sol à la position levée non opérationnelle.
